Europäisches Patentamt

**European Patent Office**

Office européen des brevets

(19)

(11) Publication number: **0 061 269**
**B1**

(12) **EUROPEAN PATENT SPECIFICATION**

(45) Date of publication of patent specification: **18.05.88**

(51) Int. Cl.⁴: **F 03 B 3/10, F 03 B 15/00**

(21) Application number: **82301271.1**

(22) Date of filing: **12.03.82**

(54) **Multi-stage hydraulic rotating machine.**

(30) Priority: **23.03.81 JP 41890/81**
**14.01.82 JP 3368/82**

(43) Date of publication of application:
**29.09.82 Bulletin 82/39**

(45) Publication of the grant of the patent:
**18.05.88 Bulletin 88/20**

(84) Designated Contracting States:
**CH DE FR LI**

(56) References cited:
**CH-A- 550 326**
**US-A-1 362 304**
**US-A-3 172 640**

(73) Proprietor: **KABUSHIKI KAISHA TOSHIBA**
**72, Horikawa-cho Saiwai-ku**
**Kawasaki-shi Kanagawa-ken 210 (JP)**

(72) Inventor: **Naka, Shigekatsu c/o Patent Division**
**Tokyo Shibaura Denki K.K. 72, Horikawa-cho**
**Saiwai-ku Kawasaki-shi Kanagawa-ken (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

This invention relates to multi-stage hydraulic rotating machines, and more particularly to apparatus for cooling areas of such machines where heat is developed between rotating and stationary elements.

A multi-stage hydraulic rotating machine comprising a pump-turbine is used as a turbine during the day to cause electricity to be generated and is used as a pump to pump water from a lower level to a higher level during the night, that is, during periods in which the demand for electricity is not high. By supplying pressurised air to a runner chamber, the water is exhausted from the water passageway after an electricity generation cycle and before a pumping cycle to avoid high load on the runners when starting up the pumping operation. During this change-over period, the runners may be rotated in air for a considerable period of time and high frictional heat develops between the rotary and stationary elements of the machine.

Consequently, the runners will become larger because of thermal expansion and the seal gaps between the rotary elements, such as peripheral edges of the runner, and the stationary elements, such as a head cover, a bottom ring and a return ring, will become smaller. The rotating runners may even contact the stationary elements and be damaged.

In the specification of CH—A—550326 it is stated that, in a known arrangement, hydraulic machines comprise a stator and a rotor with labyrinth sealing rings being arranged, in pairs, on the stator and rotor to serve as seals at gaps between the stator and the rotor. It goes on to say that, when the turbines are operating to run in air, it is customary to cool the sealing rings of the idling machine by means of water. The water is introduced into the gaps between the rotating rings and the stationary rings.

However, the invention described and claimed in this Swiss patent specification is directed to a hydraulic machine comprising a stator and a rotor, labyringth sealing rings being arranged, in pairs, on the stator and rotor to serve as seals at gaps between the stator and the rotor and where at least the radially inwardly disposed sealing rings are each provided with passages which are sealed off relative to the working medium of the machine and which passages can be supplied with a heat exchange medium by means of a pipe connection which is separate from the working medium.

The machine disclosed in the Swiss specification is a single stage machine. In the case of a single stage hydraulic machine it is relatively easy to provide a supply pipe for supplying cooling water to the seals because there is a concrete foundation under the bottom of the ring of the machine through which the cooling water can flow. However, in the case of a multi-stage hydraulic machine, the return passages of a plurality of runner chambers are connected serially so that the hydraulic machine has a complicated water flow passage. It is more difficult to supply cooling water to a runner seal portion at the highest pressure stage than at a lower pressure stage of the water flow passage.

It is an object of the present invention to improve the cooling of the gap seals on a multi-stage hydraulic rotatable machine.

Accordingly, the present invention relates to a hydraulic rotatable machine comprising a shaft rotatably mounted in a stationary housing; a runner on the shaft located in a chamber defined by the housing; a seal gap between the runner and an adjacent part of the housing; and passage means in the housing through which cooling water is supplied to the seal gap from a source external to the machine when the machine is rotated in air; characterised in that there are a plurality of runners mounted on the shaft and located in respective interconnected chambers defined by the housing to form a plurality of stages in a manner known *per se*, one of the stages being the highest stage; and the passage means includes a reservoir defined by the stationary housing of the highest pressure stage and, when the machine is rotated in air, cooling water from said external source is supplied to the reservoir and from the reservoir it is directed to the seal gap between the runner and the housing of the highest pressure stage.

In order that the invention may be more readily understood, it will now be described, by way of example only, with reference to the accompanying drawings, in which:—

Figure 1 is a longitudinal sectional view of a two-stage pump-turbine according to this invention;

Figure 2 is an enlarged view of a portion of Figure 1;

Figure 3 is a longitudinal sectional view of a second embodiment according to this invention;

Figure 4 is a longitudinal sectional view of a third embodiment according to this invention;

Figures 5 and 6 are enlarged views of portions of Figure 4;

Figure 7 is an enlarged longitudinal sectional view of a variation of the embodiment of Figure 4; and

Figure 8 is a longitudinal sectional view of a further variation of the embodiment of Figure 4.

This invention will be described with respect to a two-stage pump-turbine as an example of the invention.

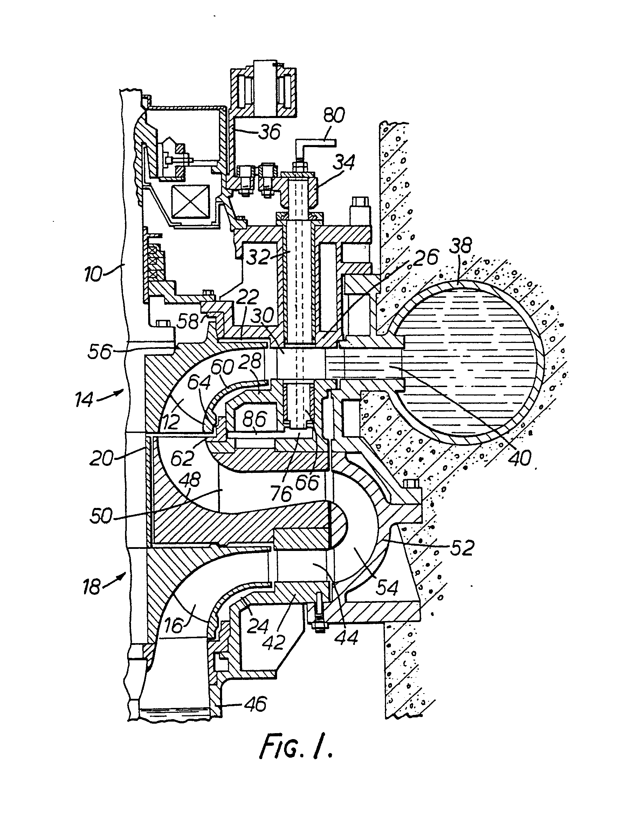

Referring to Figure 1, on a shaft 10 of the two-stage pump-turbine, a runner 12 for a higher-pressure stage 14 and a runner 16 for a lower-pressure stage 18 are mounted, coaxially. A shaft sleeve 20 is mounted on shaft 10 between the two runners 12 and 16.

Runner 12 is contained in a higher-pressure stage chamber 22, and runner 16 is contained in a lower-pressure stage chamber 24.

A head cover 26 is provided above runner 12 and a bottom ring 28 is provided under the runner, and together they constitute the higher-pressure stage chamber 22. Movable guide vanes 30 providing variable openings for the water path are positioned between the heat cover 26 and the bottom ring 28. The vanes are arranged in a circular pattern around the runner 12 at the higher-pressure stage 14. The upper ends of stems 32, which are formed with the movable guide vanes 30, are connected to a well-known guide vane drive link mechanism 34, so that the guide vanes 30 are opened or shut by a guide ring 36 forming part of the mechanism 34.

A spiral casing 38 has stay vanes 40 which are arranged in a circular pattern around the movable guide vanes 30.

A bottom ring 42 is provided under runner 16 at the lower-pressure stage 18. Stay vanes 44 of the bottom ring 42 are arranged in a circular pattern around runner 16 and the lower end of bottom ring 42 is connected to a draft tube 46. A return ring 48 is provided between bottom ring 42 and bottom ring 28 of the higher-pressure stage 14 and serves as a head cover for runner 16 of the lower-pressure stage 18. Return ring 48 has a plurality of return vanes 50 for regulating the water flow. An outer casing 52 having return passages 54 connects return ring 48 to lower-pressure stage 18.

Runner crown 56 of a runner 12 at higher-pressure stage 14 is sealed by an upper cover line 58 mounted on head cover 26. Runner band 60 of runner 12 is sealed by a lower cover liner 62 mounted on bottom ring 28. There is a seal gap 64 between runner band 60 and lower cover liner 62.

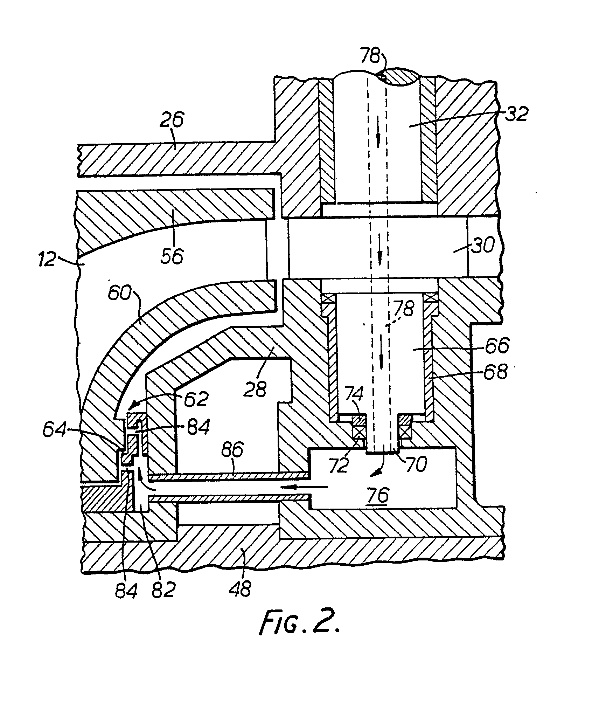

Referring to both Figures 1 and 2, a lower stem 66, which is formed with the movable guide vane 30, is pivoted in the bottom ring 28 by an oil-less bearing 68. The end of the lower stem 66 has a small diameter portion 70. A packing 72 and a packing clamp 74 are located between the small diameter portion 70 of lower stem 66 and bottom ring 28. A cooling water reservoir 76 is provided under the small diameter portion 70 in the bottom ring 28. In this embodiment, preferably two or four separate cooling water reservoirs 76 may be provided in the higher-pressure stationary element 28. On the other hand, a continuous annular cooling water reservoir may be provided around higher-pressure runner 12. The cooling water is supplied to each reservoir 76 through a supply passage 78 along the axis of stem 32, guide vane 30 and lower stem 66. A water supply source (not shown) is connected to supply passage 78 through a water supply pipe 80.

Referring again to Figure 2, lower cover liner 62 has a water guide chamber having connection passages 84 opening to seal gap 64. Cooling water reservoir 76 and water guide chamber 82 are connected by a communication pipe 86. The number of such pipes 86 being equal to that of cooling water reservoirs 76 may be provided separately in a circular pattern around higher-pressure stage runner 12. In the case of a continuous annular cooling water chamber around runner 12, an appropriate number of communication pipes 86 may be arranged radially.

According to this embodiment, the cooling water is supplied to cooling water reservoir 76 through water supply pipe 80 and supply passage 78 from the water supply source. Furthermore, the cooling water is supplied to water guide chamber 82, through communication pipe 86 from cooling water reservoir 76 to seal gap 64 through connection passages 84. Consequently, seal gap 64 is filled with the cooling water and runner band 60 is cooled.

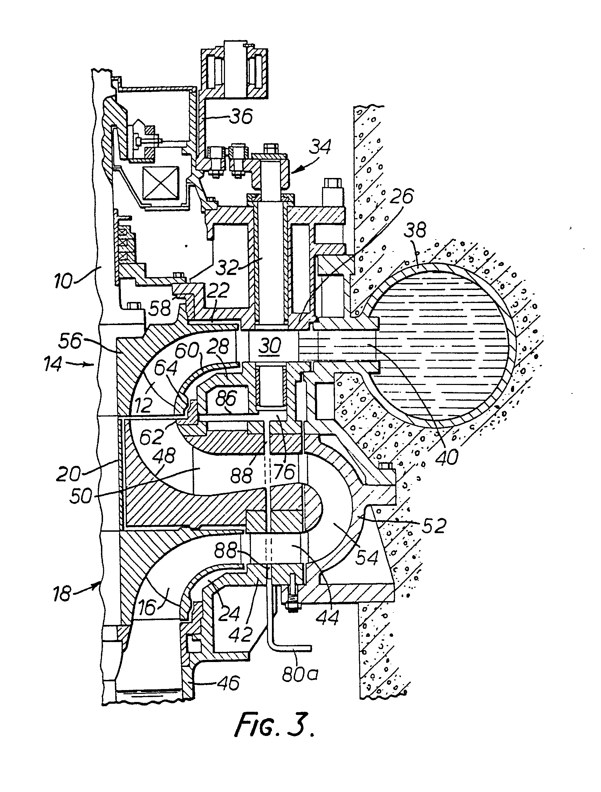

In the embodiment shown in Figure 3, the cooling water supply passage is different from the one shown in Figures 1 and 2. In this embodiment, cooling water supply passage 88 is provided to pass through bottom ring 42 of lower-pressure stage 18, stay vane 44, return ring 48, and bottom ring 28 of higher-pressure stage 14. The lower end of cooling water supply passage 88 is connected to a water supply pipe 80a. The cooling water is supplied to cooling water reservoir 76 through cooling water supply passage 88 and, thereafter, the cooling water is led to guide water chamber 82 through communication pipe 86 and is supplied to seal gap 64 through connection passages 84, as shown in the first embodiment.

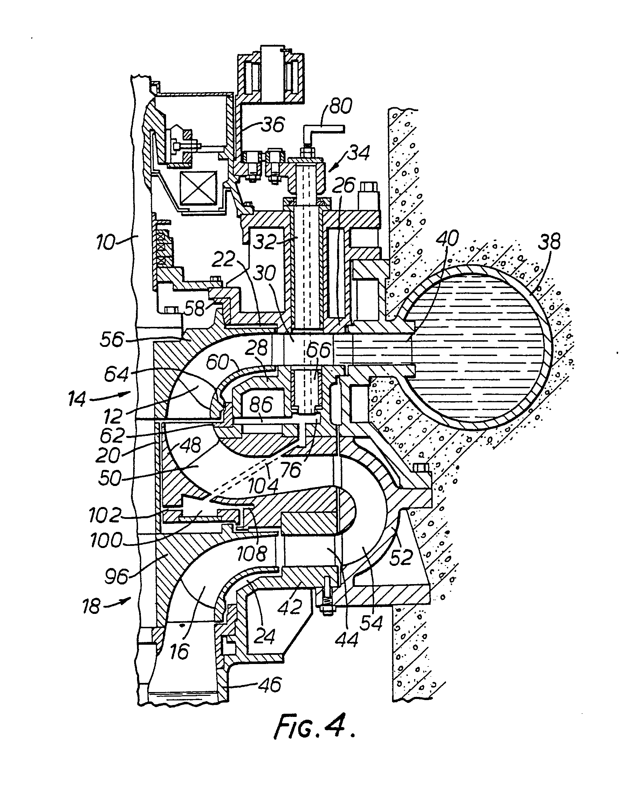

Referring to Figures 4, 5 and 6, a third embodiment will be described according to this invention. In particular, a seal gap 90 between the shaft sleeve 20 and a seal liner 92 of the return ring 48 and a seal gap 94 between runner crown 96 of lower-pressure stage 18 and a seal liner 98 of return ring 48 are shown.

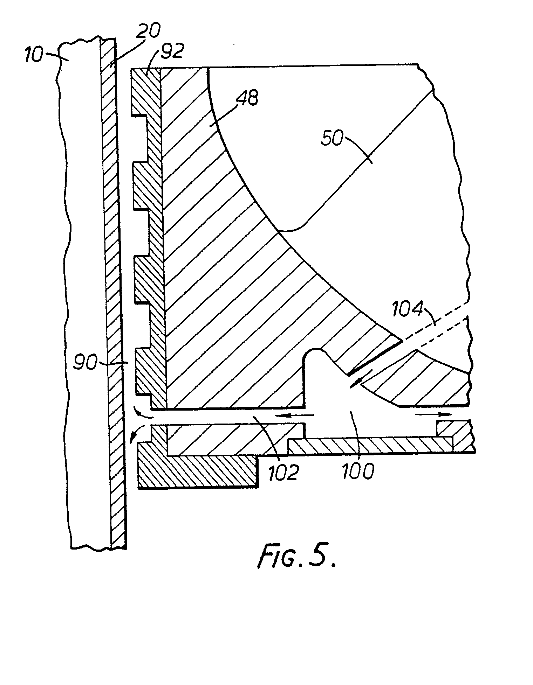

As shown in Figure 5, return ring 48 has a pressure chamber 100. A communication passage 102 opening to seal gap 90 is connected to pressure chamber 100. The cooling water from reservoir 76 is supplied to pressure chamber 100 through a communication passage 104 in return ring 48 and is supplied to seal gap 90 through communication passage 102.

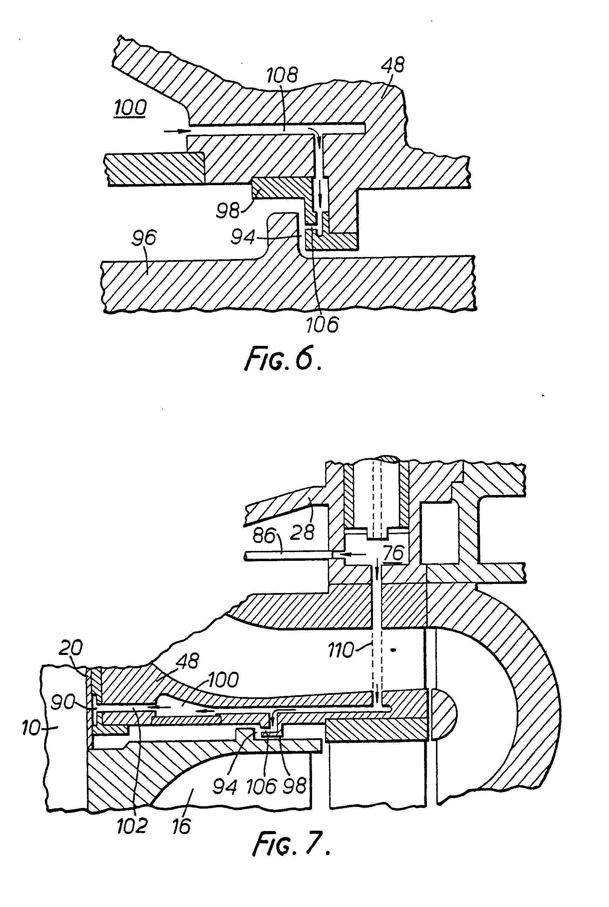

As shown in Figure 6, seal liner 98 has a connection passage 106 opening to seal gap 94. Connection passage 106 is connected to pressure chamber 100 through a communication passage 108 in return ring 48. The cooling water from pressure chamber 100 is supplied to seal gap 94 through communication passage 108 and connection passage 106.

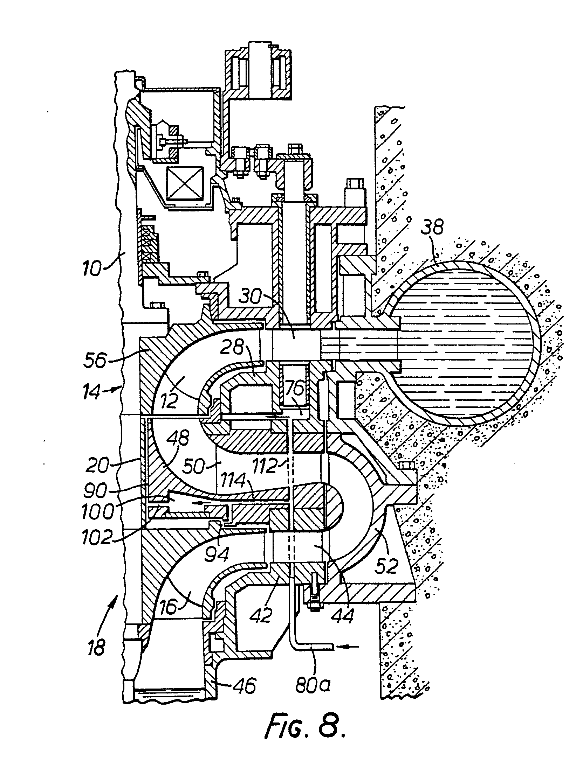

A variation in the embodiment of Figure 4 is shown in Figure 7. As shown therein, the cooling water may be supplied to seal gap 94 between runner 16 of lower-pressure stage 18 and return ring 48 through connection passage 106 and a communication passage 110 which is directly connected to water chamber 76. In the structure of Figure 7, the cooling water is supplied to seal gap 90 through pressure chamber 100 and communication passage 110.

A further variation in the embodiment of Figure 4 is shown in Figure 8. As shown therein, a cooling water supply passage 112 is provided to pass through bottom ring 42 of lower-pressure stage 18, stay vane 44, return ring 48 and bottom ring 28 of higher-pressure stage 14 to reservoir 76. The lower end of cooling water supply passage 112 is connected to water supply pipe 80a. Pressure chamber 100 and seal gap 94 are connected to supply passage 112 through a communication passage 114. The cooling water is supplied to seal gap 90 through communication passage 102, pressure chamber 100 and communication passage 114 from supply passage 112 and is supplied to seal gap 94 through communication passage 114 from supply passage 112.

In the afore-mentioned embodiments, this invention is applied to a two-stage pump-turbine in which variable guide vanes are provided at the higher-pressure stage. However, this invention may be applied to a two-stage pump-turbine in which variable guide vanes are also provided at the lower-pressure stage. Furthermore, this invention may also be applied to multi-stage pump turbine which have more than two stages.

By this invention, cooling water is supplied to the seal gap formed between the rotary and stationary elements. The runner is effectively cooled when the multi-stage hydraulic machine is operated and the machine runs in air. Any contact between the rotary and stationary elements of the machine can thus be avoided.

**Claims**

1. A hydraulic rotatable machine comprising
a shaft (10) rotatably mounted in a stationary housing (26, 28);
a runner (12) on the shaft located in a chamber (22) defined by the housing;
a seal gap (64) between the runner and an adjacent part of the housing; and
passage means (78, 86) in the housing through which cooling water is supplied to the seal gap from a source external to the machine when the machine is rotated in air; characterised in that
there are a plurality of runners (12, 16) mounted on the shaft (10) and located in respective interconnected chambers (22, 24) defined by the housing to form a plurality of stages in a manner known *per se*, one of the stages being the highest stage; and
the passage means includes a reservoir (76) defined by the stationary housing of the highest pressure stage and, when the machine is rotated in air, cooling water from said external source is supplied to the reservoir and from the reservoir it is directed to the seal gap (64) between the runner (12) and the housing of the highest pressure stage.

2. A hydraulic rotatable machine as claimed in claim 1, characterised in that the cooling water is directed from the reservoir (76) through a plurality of pipes (86) to different parts of the seal gap.

3. A hydraulic rotatable machine as claimed in claim 2, characterised in that the seal gap (64) is between the runner (12) and a cover liner (62) mounted on the stationary housing, said pipes (86) leading to the interior of the cover liner and the cooling water passing from the interior of the liner through passages (84) in the wall of the liner to the seal gap (64).

4. A hydraulic rotatable machine as claimed in claim 1, 2 or 3, in which movable guide vanes (30) formed with upper stems (32) and lower stems (66) are provided in a circular arrangement around the runner of the highest pressure stage and characterised in that the passage means through which the cooling water is supplied to the reservoir includes a passage (78) in the guide vanes and in the upper and lower stems.

5. A hydraulic rotatable machine as claimed in claim 1, 2 or 3, in which there are two stages, namely the highest pressure stage and the lowest pressure stage, there is a return ring (48) between the runners of the two stages and stay vanes (44) are provided in a circular arrangement around the runner of the lowest pressure stage, characterised in that the passage means through which the cooling water is supplied to the reservoir includes a passage (88) in the stay vanes and in the return ring.

6. A hydraulic rotatable machine as claimed in any preceding claim, in which there is a seal gap (90) between the rotatable shaft (10) and part (92) of the stationary housing, characterised in the provision of passages (104, 102) through which cooling water is supplied from the reservoir (76) to the seal gap (90) between the shaft and the stationary housing.

7. A hydraulic rotatable machine as claimed in claim 6, in which there are two stages, namely the highest pressure stage and the lowest pressure stage and there is a return ring (48) between the runners of the two stages, characterised in that a chamber (100) is provided in the return ring (48) and cooling water from the reservoir (76) is supplied to the chamber (100) through passage (104) and from the chamber to the seal gap (90) through passage (102).

8. A hydraulic rotatable machine as claimed in claim 7, characterised in that there is a seal gap (94) between the return ring (48) and the runner (16) of the lower pressure stage and cooling water is supplied to this seal gap (94) from the chamber (100).

**Patentansprüche**

1. Wasserkraftmaschine mit einer Welle (10), die in einem stationären Gehäuse (26, 28) drehbar gelagert ist,
mit einem an der Welle (10) befestigten Turbinenlaufrad (12), das in einer vom Gehäuse gebildeten Kammer (22) angeordnet ist,
mit einem Dichtungsspalt (64) zwischen dem Turbinenlaufrad (12) und einem benachbarten Gehäuseteil und
mit Zuleitungen (78, 86) die im Gehäuse angeordnet sind und über die dem Dichtungsspalt (64) von einem externen Wasseranschluß aus Kühlwasser in dem Falle zuführbar ist, in dem die Wasserkraftmaschine in Luft arbeitet, dadurch gekennzeichnet,
daß, wie an sich bekannt, mehrere Turbinenlaufräder (12, 16) auf die Welle (10) aufgesetzt und in den jeweils zutreffenden Kammern (22, 24) des Gehäuses derart angeordnet sind, daß ein mehrstufiges System gebildet wird, wobei in einer der Stufen der höchste Druck ansteht,

daß den Zuleitungen im stationären Gehäusebereich der größten Druckstufe ein Reservoir (76) zugeordnet ist, und

daß dem Dichtungsspalt (64) zwischen dem Turbinenlaufrad (12) und dem Gehäusebereich für die größte Druckstufe Kühlwasser vom externen Wasseranschluß über das Reservoir (76) zugeführt wird, wenn die Wasserkraftmaschine in Luft arbeitet.

2. Wasserkraftmaschine nach Anspruch 1, dadurch gekennzeichnet, daß das Kühlwasser aus dem Reservoir (76) über mehrere Rohrleitungen (86) den verschiedenen Teilen des Dichtungsspaltes zuführbar ist.

3. Wasserkraftmaschine nach Anspruch 2, dadurch gekennzeichnet, daß der Dichtungsspalt (64) zwischen dem Turbinenlaufrad (12) und einer am stationären Gehäuse angebrachten Dichtungsbuchse (62) vorgesehen ist, daß die Rohrleitungen (86) bis in das Innere der Dichtungsbuchse geführt sind und daß das Kühlwasser vom Inneren der Dichtungsbuchse durch Zuführungskanäle (84), die in die Wandung der Dichtungsbuchse eingearbeitet sind, in den Dichtungsspalt (64) weiterleitbar ist.

4. Wasserkraftmaschine nach Anspruch 1, 2 oder 3, bei der verstellbare Leitschaufeln (30) vorgesehen sind, die obere Spindeln (32) und untere Spindeln (66) aufweisen und kreisförmig um das Turbinenlaufrad der größten Druckstufe angeordnet sind, dadurch gekennzeichnet, daß die Zuleitungen, durch die dem Reservoir das Kühlwasser zuführbar ist, einen Zuführungskanal (78) aufweisen, der sowohl in die Leitschaufeln (30) als auch in die oberen und unteren Spindeln (32, 66) eingearbeitet ist.

5. Wasserkraftmaschine nach Anspruch 1, 2 oder 3 mit einer Stufe für den größten Druck und einer Stufe für den niedrigsten Druck, mit einem Rücklaufring (48), der zwischen den Turbinenlaufrädern der beiden Druckstufen angeordnet ist sowie mit kreisförmig um das Turbinenlaufrad der niedrigsten Druckstufe angeordneten feststehenden Leitschaufeln (44), dadurch gekennzeichnet, daß die Zuleitungen einen Zuführungskanal (88) aufweisen, der sowohl in die feststehenden Leitschaufeln (44) als auch in den Rücklaufring (48) eingearbeitet ist.

6. Wasserkraftmaschine nach mindestens einem der Ansprüche 1 bis 5, bei der zwischen der drehbar gelagerten Welle (10) und einem Teil (92) des stationären Gehäuses ein Dichtungsspalt (90) vorhanden ist, dadurch gekennzeichnet, daß Zuführungskanäle (104, 102) vorgesehen sind, durch die Kühlwasser vom Reservoir aus in den zwischen der Welle (10) und dem stationären Gehäuse vorhandenen Dichtungsspalt (90) einspeisbar ist.

7. Wasserkraftmaschine nach Anspruch 6, mit einer Stufe für den größten Druck und einer für den niedrigsten Druck, und mit einem zwischen den Turbinenlaufrädern der beiden Stufen angeordneten Rücklaufring (48), dadurch gekennzeichnet, daß in dem Rücklaufring (48) eine Kammer (100) angeordnet ist, und daß das Kühlwasser von dem Reservoir (76) aus über den Zuführungskanal (104) zur Kammer (100) und von dort aus über den Zuführungskanal (102) dem Dichtungsspalt (90) zuführbar ist.

8. Wasserkraftmaschine nach Anspruch 7, dadurch gekennzeichnet, daß zwischen dem Rücklaufring (48) und dem Turbinenlaufrad (16) ein Dichtungsspalt (94) vorgesehen und diesem das Kühlwasser von der Kammer (100) aus zuführbar ist.

**Revendications**

1. Machine hydraulique rotative qui comprend:
   un arbre (10) monté à rotation dans une enveloppe fixe (26, 28);
   une roue (12) montée sur ledit arbre et logée dans une chambre (22) définie par l'enveloppe;
   un intervalle de joint (64) entre la roue et une partie adjacente de l'enveloppe; et
   des canaux (78, 80) prévus dans l'enveloppe et par lesquels de l'eau de refroidissement est fournie à l'intervalle de joint à partir d'une source extérieure à la machine quand cette dernière tourne dans l'air;
   caractérisée en ce que plusieurs roues (12, 16) sont montées sur l'arbre (10) et sont logées respectivement dans des chambres interconnectées (22, 24) définies par l'enveloppe de manière à former un certain nombre d'étages, d'une manière connue et classique, l'un de ces étages étant le plus élevé et en ce que les canaux incluent un réservoir (76) défini par l'enveloppe fixe de l'étage de pression le plus élevé et, quand la machine tourne dans l'air, de l'eau de refroidissement provenant de ladite source extérieure, est fournie au réservoir et est dirigée par celui-ci vers l'intervalle de joint (64) compris entre la roue (12) et l'enveloppe de l'étage de pression le plus élevé.

2. Machine hydraulique rotative selon la revendication 1, caractérisée en ce que l'eau de refroidissement est dirigée du réservoir (76), par un certain nombre de tuyaux (86), vers les différentes parties de l'intervalle de joint.

3. Machine hydraulique rotative selon la revendication 2, caractérisée en ce que l'intervalle de joint (64) est situé entre la roue (12) et une garniture de couvercle (62) montée sur l'enveloppe fixe, lesdits tuyaux (86) conduisant à l'intérieur de ladite garniture, tandis que l'eau de refroidissement passe de l'intérieur de la garniture par des canaux (84) ménagés dans la paroi de la garniture pour gagner l'intervalle de joint (64).

4. Machine hydraulique rotative selon l'une quelconque des revendications 1, 2 et 3, caractérisée en ce que des aubes de guidage mobiles (30), formées avec des tiges supérieures (32) et inférieures (66) sont disposées en cercle autour de la roue de l'étage de pression le plus élevé et en ce que les canaux par lesquels l'eau de refroidissement alimente le réservoir comprennent un canal (78) passant dans le aubes de guidage et dans les tiges supérieures et inférieures.

5. Machine hydraulique rotative selon l'une quelconque des revendications 1, 2 et 3, qui comprend deux étages, notamment un étage de haute pression et un étage de basse pression, et en ce qu'une bague de retour (48) est interposée entre les roues des deux étages, tandis que des aubes fixes (44) sont disposées en cercle autour de la roue de l'étage de pression inférieur, caractérisée en ce que les canaux par lesquels l'eau de refroidissement est fournie au réservoir comprennent un canal (88) situé dans les aubes fixes et dans la bague de retour.

6. Machine hydraulique rotative selon l'une quelconque des revendications précédentes, qui comporte un intervalle de joint (90) entre l'arbre rotatif (10) et une partie (92) de l'enveloppe fixe, caractérisée par la présence de canaux (104, 102) par lesquels l'eau arrive du réservoir (76) à l'intervalle de joint (90) situé entre l'arbre et l'enveloppe fixe.

7. Machine hydraulique rotative selon la revendication 6, comportant deux étages, notamment un étage de haute pression et un étage de basse pression et où une bague de retour (48) est interposée entre les roues des deux étages, caractérisée en ce qu'une chambre (100) est prévue dans la bague de retour (48) et en ce que de l'eau de refroidissement du réservoir (76) alimente la chambre (100) et par un canal (104) de cette chambre, l'intervalle de joint (90) par un canal (102).

8. Machine hydraulique rotative selon la revendication 7, caractérisée en ce qu'un intervalle de joint (94) s'étend entre la bague de retour (48) et la roue (16) de l'étage de basse pression, et en ce que de l'eau de refroidissement est fournie à cet intervalle de joint (94) à partir de la chambre (100).

FIG. 1.

FIG. 2.

FIG. 3.

Fig. 4.

FIG. 5.

Fig. 6.

Fig. 7.

Fig. 8.